# EUROPEAN PATENT SPECIFICATION

(11) **EP 3 979 131 B1**
(45) Date of publication and mention of the grant of the patent: **04.03.2026**
(21) Application number: 20199920.8
(22) Date of filing: 02.10.2020
(51) Int. Cl.: G06N 3/0464, G06N 3/09, G06N 3/096, G06V 10/764, G06V 20/52

(54) **A METHOD FOR DETERMINING AT LEAST ONE STATE OF AT LEAST ONE CAVITY OF A TRANSPORT INTERFACE CONFIGURED FOR TRANSPORTING SAMPLE TUBES**
VERFAHREN ZUR BESTIMMUNG MINDESTENS EINES ZUSTANDES MINDESTENS EINES HOHLRAUMS EINER TRANSPORTSCHNITTSTELLE MIT KONFIGURATION ZUM TRANSPORT VON PROBENRÖHRCHEN
PROCÉDÉ PERMETTANT DE DÉTERMINER AU MOINS UN ÉTAT D'AU MOINS UNE CAVITÉ D'UNE INTERFACE DE TRANSPORT CONÇUE POUR TRANSPORTER DES TUBES D'ÉCHANTILLONS

(43) Date of publication of application: 06.04.2022
(73) Proprietor: Roche Diagnostics GmbH, 68305 Mannheim (DE); F. Hoffmann-La Roche AG, 4070 Basel (CH)
(72) Inventor: MEHTA, Kumar Roshan, 71636 Ludwigsburg (DE)
(74) Representative: Altmann Stößel Dick Patentanwälte PartG mbB

(56) References cited:
- KR-A- 20140 091 033
- US-A1- 2010 291 619
- US-A1- 2020 167 591
- US-A1- 2020 309 802
- US-B2- 10 140 705

## Description

### Technical Field

The present invention refers to a method for determining at least one state of at least one cavity of a transport interface configured for transporting sample tubes. The invention further relates to an inspection device for a transport interface. The method and device specifically may be used in the field of medical or chemical laboratories. Other fields of application of the present invention, however, are feasible.

### Background art

In the field of medical or chemical laboratories, sample transport system is used for distributing sample tubes between laboratory stations, e.g. between instruments, of a laboratory automation system. The tubes may comprise a wide variety of samples, such as blood, blood serum or plasma, urine or chemical substances and the tubes could also be of several types having different shapes, diameter, colors, heights etc. The laboratory automation system may comprise a transport interface providing an interface between the transport system and the respective laboratory station. The transport interface may comprise a plurality of cavities for receiving sample tubes for delivering them to the respective laboratory station. For complete automation, it may be necessary to determine a status of the cavities such as if a tube is present or if the cavity is empty cavity.

US 10,140,705 B2 describes methods and systems for detecting properties of sample tubes in a laboratory environment which include a drawer vision system that can be trained and calibrated. Images of a tube tray captured by at least one camera are analyzed to extract image patches that allow a processor to automatically determine if a tube slot is occupied, if the tube has a cap, and if the tube has a tube top cup. The processor can be trained using a random forest technique and a plurality of training image patches. Cameras can be calibrated using a three-dimensional calibration target that can be inserted into the drawer.

WO 2019084468 A1 describes systems and methods for recognizing various sample containers carried in a rack. The systems and methods are performed to identify sample containers in the rack and detect various characteristics associated with the containers and/or the rack, which are evaluated to determine the validity and/or types of the containers in the rack.

US 2018/0164335 A1 describes systems and methods for use in an in vitro diagnostics setting including an automation track, a plurality of carriers configured to carry a plurality of sample vessels along the automation track, and a characterization station including a plurality of optical devices. A processor, in communication with the characterization station, can be configured to analyze images to automatically characterize physical attributes related to each carrier and/or sample vessel.

WO 2019/018313 A1 describes a quality check module for characterizing a specimen and/or a specimen container including stray light compensation. The quality check module includes an imaging location within the quality check module configured to receive a specimen container containing a specimen, one or more image capture devices configured to capture images of the imaging location from one or more viewpoints, and one or more light sources configured to provide back lighting for the one or more image capture devices, and one or more stray light patches located in an area receiving stray light from the one or more light sources enabling stray light affecting the images to be compensated for and to provide a stray light compensated image.

WO 2018/022280 A1 describes a model-based method of determining characteristics of a specimen container cap to identify the container cap. The method includes providing a specimen container including a container cap; capturing backlit images of the container cap taken at different exposures lengths and using a plurality of different nominal wavelengths; selecting optimally-exposed pixels from the images at different exposure lengths at each nominal wavelength to generate optimally-exposed image data for each nominal wavelength; classifying the optimally-exposed pixels as at least being one of a tube, a label or a cap; and identifying a shape of the container cap based upon the optimally-exposed pixels classified as being the cap and the image data for each nominal wavelength.

JP 2019027927 A describes a device for determining the state of a sample as an analysis target in a container. The device acquires an image of a sample, analyzes the position and the size of a detection target to a detection range set in the image of the sample, using the image, and determines the state of the sample based on the result of the analysis.

DE 10 2014 224 519 A1 describes a labelling device for labelling containers having a transport carousel on which a plurality of container receptacles are arranged for container alignment. The labelling container has a first detection unit for a first alignment feature on the containers and having at least one first labelling unit arranged on the transport carousel for applying labels on the basis of container alignment according to the first alignment feature. The labelling device comprises a second detection unit for a second alignment feature on container closures. At least one second labelling unit for applying labels on the basis of a container alignment according to the second alignment feature is arranged on the transport carousel.

US02020/0167591 A1 describes methods for image-based detection of the tops of sample tubes used in an automated diagnostic analysis system which may be based on a convolutional neural network to pre-process images of the sample tube tops to intensify the tube top circle edges while suppressing the edge response from other objects that may appear in the image. Edge maps generated by the methods may be used for various image-based sample tube analyses, categorizations, and/or characterizations of the sample tubes to control a robot in relationship to the sample tubes. Image processing and control apparatus configured to carry out the methods are also described, as are other aspects.

KR 2014 0091033 A describes a system which includes at least one image acquisition device configured to obtain one or more images of sample containers in a sample container holder. It also includes an image analysis device coupled to the at least one image acquisition device. The image analysis device is configured to analyze, by a processor, the one or more images of the sample containers in the sample container holder, to determine (a) a presence or absence of sample containers at sample container holder locations in the sample container holder, and (b) sample container characteristics of the sample containers in the sample container holder, wherein the sample container characteristics include one or more of cap color, cap shape, labels and markers associated with the sample containers, or one or more sample container holder characteristics.

Despite the advantages achieved by the known methods and devices several technical challenges remain. Classification and detection of cavity status into different categories may be problematic in case of different and/or changing illumination and/or lightning conditions as well as in case of a varying distance between a view point from the cavity. A calibration taking into account these factors may be time and, thus, cost-consuming.

### Problem to be solved

It is therefore desirable to provide a method and devices which at least partially address the above-mentioned technical challenges of known methods and devices of similar kind. Specifically, a method and devices shall be proposed which allow for classification and detection of cavity status into different categories even in case of different and/or changing illumination and/or lightning conditions and/or varying distance between a view point from the cavity, in a simple and cost-effective manner.

### Summary

This problem is addressed by a method for determining at least one state of at least one cavity of a transport interface configured for transporting sample tubes and an inspection device with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a method determining at least one state of at least one cavity of a transport interface configured for transporting sample tubes is disclosed.

The term "sample" as used herein is a broad term and is to be given its ordinary and customary meaning to a person of ordinary skill in the art and is not to be limited to a special or customized meaning. The term specifically may refer, without limitation, to an aliquot of a substance such as a chemical or biological compound. Specifically, the sample may be or may comprise at least one biological specimen, such as one or more of: blood; blood serum; blood plasma; urine; saliva. Additionally or alternatively, the sample may be or may comprise a chemical substance or compound and/or a reagent.

The term "sample tube" as used herein is a broad term and is to be given its ordinary and customary meaning to a person of ordinary skill in the art and is not to be limited to a special or customized meaning. The term specifically may refer, without limitation, to a container configured for one or more of containing, storing or transporting the sample. The sample tube may be a glass or transparent plastic tube. The sample tube may be a cylindrical tube, e.g. a cylindrical tube having a circular and/or polygonal cross-section. Other types or forms of sample tubes are also possible. The sample tube may comprise a tube bottom, a tube body and a cap, including a sealing of the cap. The tube bottom may be configured to confine the sample tube at the sample tube's lower end. The tube body may be configured for forming the shape of the sample tube. The cap may be configured for reversibly closing up the sample tube at the sample tube's upper end by using a mechanism of a specific sealing type. For example, the sample tube's cap sealing may comprise one or more of a screw type, a rubber type, a hemogard type or a push type. The upper and lower end of the sample tube may be defined by the way of usage of the sample tube.

The transport interface may be part of a laboratory automation system (LAS), in particular for large laboratories. The term "laboratory automation system" as used herein is a broad term and is to be given its ordinary and customary meaning to a person of ordinary skill in the art and is not to be limited to a special or customized meaning. The term specifically may refer, without limitation, to a system which is configured for handling sample tubes automatically. Specifically, the LAS may be configured for processing sample tubes and their enclosed samples autonomously and/or fully or partially automatically. A laboratory in which the LAS is used may be for example a clinical laboratory, a forensic laboratory or a blood bank. The LAS, as an example, may comprise at least one transport module, such as an actuator, configured for handling the at least one sample tube, such as configured for handling a plurality of sample tubes, e.g. sequentially or in parallel. The transport module, as an example, may be configured for automatically moving the at least one sample tube, such as through a plurality of handling stations within the system. As an example, the transport module may be or may comprise one or more of a robot arms, a conveying system or a carrousel. Other transport modules are known and may be used. The LAS may further comprise one or more handling stations for handling and/or processing one or more samples contained in the at least one sample tube. As an example, one or more stations for adding components to the sample, one or more stations for heating the sample or one or more stations for sample separation such as by centrifuging may be provided. The LAS may comprise at least one analytical system for sample analysis. The LAS may comprise at least one pre-analytical system, specifically for preparing one or more samples for subsequent sample analysis.

The term "transport interface" as used herein is a broad term and is to be given its ordinary and customary meaning to a person of ordinary skill in the art and is not to be limited to a special or customized meaning. The term refers to a device forming a physical boundary configured for transferring or providing transfer of the at least one sample tube between the transport module and a connected device, in particular a handling station.

The transport interface may comprise a plurality of cavities each configured for receiving and/or holding at least one sample tube. The term "cavity" as used herein is a broad term and is to be given its ordinary and customary meaning to a person of ordinary skill in the art and is not to be limited to a special or customized meaning. The term specifically may refer, without limitation, to a reception region and/or holding region configured for receiving and/or holding at least one sample tube. The cavities may comprise at least one holder. For example, the holder may be a single holder configured for receiving and holding exactly one sample tube. The holder may be configured for directly contacting with the sample tube for receiving and holding the sample tube. For example, the holder may be open at one side, in particular at a top or face side, for enabling insertion of the sample tube.

The transport interface may comprise at least one carousel, wherein the cavities are distributed, in particular equally distributed over the circumference of the carousel. The carousel may be rotatable. The transport interface may face the transport module at at least one input position, in particular minimum one input position. At the input position, the holder and/or the holder and the sample tube can be loaded, in particular automatically, onto the respective cavity. The transport interface may face the transport module and/or a further transport module at at least one further position, in particular minimum one further position, denoted output position. At the output position, the holder and/or the holder and the sample tube can be transferred from the transport interface to the transport module and/or to the further transport module. The transport interface may comprise at least one rotor configured for moving the cavities, in particular for rotating the cavities. The transport interface may comprise at least one handover position, wherein at the handover position the sample tube can be transferred from the transport interface to the connected device and/or from the connected device to the transport interface.

The term "status of the at least one cavity" as used herein is a broad term and is to be given its ordinary and customary meaning to a person of ordinary skill in the art and is not to be limited to a special or customized meaning. The term specifically may refer, without limitation, to an arbitrary information characterizing the cavity into categories such as empty cavity, presence of a holder in the cavity, closed sample tube in the cavity; open holder in the cavity. The empty cavity may be a cavity without sample tube and holder. The category presence of a holder may be further divided into holder with or without sample tube. The category closed sample tube may refer to a situation with a holder and a sample tube in the cavity, wherein the sample tube is closed by the sample tube's cap. The category open sample tube may refer to a situation with a holder and a sample tube in the cavity, wherein the sample tube is not closed by the sample tube's cap.

The method comprises the following steps which specifically may be performed in the given order. It shall be noted, however, that a different order is also possible. Further, it is also possible to perform one or more of the method steps once or repeatedly. Further, it is possible to perform two or more of the method steps simultaneously or in a timely overlapping fashion. The method may comprise further method steps which are not listed.

The method according to claim 1, comprises:
i) capturing at least one image of at least a part of the transport interface by using at least one camera, wherein the image in step i) is a frame of at least one video stream captured by using the camera;
ii) categorizing the state of the cavity into at least one category by applying at least one trained model on the image by using at least one processing unit, wherein the trained model is being trained on image data of the transport interface, wherein the image data comprises a plurality of images of the transport interface with cavities in different states, wherein the trained model is a convolutional neural network model;
iii) providing the determined category of at least one cavity via at least one communication interface.

The transport interface is a device forming a physical boundary configured for transferring or providing transfer of the sample tubes between a transport module and a connected device. The method comprises determining how many times the transport interface has to rotate for clearance and optionally if it is possible to start operation with the connected device based on the determined and/or provided category

The term "camera" as used herein is a broad term and is to be given its ordinary and customary meaning to a person of ordinary skill in the art and is not to be limited to a special or customized meaning. The term specifically may refer, without limitation, to a device having at least one imaging element configured for recording or capturing spatially resolved one-dimensional, two-dimensional or even three-dimensional optical data or information. The camera may be a pixelated camera comprising a matrix of pixels. As an example, the camera may comprise at least one camera chip, such as at least one CCD chip and/or at least one CMOS chip configured for recording images. The camera may be an element or unit of the transport interface.

The camera, besides the at least one camera chip or imaging chip, may comprise further elements, such as one or more optical elements, e.g. one or more lenses. As an example, the camera may comprise one or more variable lenses which may be adjusted, automatically or manually such as at least one vario zoom camera lens. Alternatively, however, the camera may be a fix-focus camera, having at least one lens which is fixedly adjusted with respect to the camera.

The camera specifically may be a color camera. Thus, such as for each pixel, color information may be provided or generated, such as color values for three colors. A larger number of color values is also feasible, such as four color values for each pixel. Color cameras are generally known to the skilled person. Thus, as an example, the camera chip may consist of a plurality of three or more different color sensors each, such as color recording pixels like one pixel for red (R), one pixel for green (G) and one pixel for blue (B). For each of the pixels, such as for R, G, B, values may be recorded by the pixels, such as digital values in the range of 0 to 255, depending on the intensity of the respective color. Instead of using color triples such as R, G, B, as an example, quadruples may be used. The color sensitivities of the pixels may be generated by color filters or by appropriate intrinsic sensitivities of the sensor elements used in the camera pixels. These techniques are generally known to the skilled person.

The term "image" as used herein is a broad term and is to be given its ordinary and customary meaning to a person of ordinary skill in the art and is not to be limited to a special or customized meaning. The term specifically may refer, without limitation, to data recorded by using the camera, such as a plurality of electronic readings from the camera, such as the pixels of the camera chip. Thus, the image may be or may comprise at least one array of information values, such as an array of grey scale values and/or color information values. The image may be a single-color image or a multi-color or colored image.

The term "capturing at least one image" as used herein is a broad term and is to be given its ordinary and customary meaning to a person of ordinary skill in the art and is not to be limited to a special or customized meaning. The term specifically may refer, without limitation, to one or more of imaging, image recording, image acquisition, image capturing. The capturing at least one image may comprise capturing a single image and/or a plurality of images such as a sequence of images. The capturing of the image comprises recording continuously a sequence of images such as a video stream or a movie. The image is a frame of at least one video stream captured by using the camera.

The term "capturing at least one image of at least a part of the transport interface" as used herein is a broad term and is to be given its ordinary and customary meaning to a person of ordinary skill in the art and is not to be limited to a special or customized meaning. The term specifically may refer, without limitation, to capturing at least one image comprising a region of interest. Specifically, the capturing of the image may refer to embodiments wherein the at least one image is captured of the whole transport interface and to embodiments wherein the at least one image is captured of the region of interest such as an area or region such as a cavity of the transport interface.

The at least one image of at least a part of the transport interface may be captured from top view. The top view may be characterized by a position of the camera in a plane essentially parallel to a plane on which the transport interface is placed. The term "essentially parallel" may refer to embodiments in which the camera is parallel to the plane on which the transport interface is placed wherein deviations from less than 20 %, preferably 10 %, more preferably 5 % from a parallel arrangement are possible.

The capturing of the image may be synchronized to a movement of transport interface. Additionally or alternatively, the capturing of the image may be automatically initiated, e.g. such as imaging in recurrent intervals or once the presence of the at least one object within a field of view and/or within a predetermined sector of the field of view of the camera is automatically detected. The capturing of the images may comprise, as an example, acquiring a stream of images with the camera, wherein one or more of the images, automatically or by user interaction. The capturing of the image may be performed and/or supported by a processor, such as of transport interface. The captured image may be stored in at least one data storage device, such as of the transport interface.

The term "processing unit" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processing unit may be configured for processing basic instructions that drive the computer or system. As an example, the processing unit may comprise at least one arithmetic logic unit (ALU), at least one floating-point unit (FPU), such as a math coprocessor or a numeric coprocessor, a plurality of registers, specifically registers configured for supplying operands to the ALU and storing results of operations, and a memory, such as an L1 and L2 cache memory. In particular, the processing unit may be a multicore processor.

Specifically, the processing unit may be or may comprise a central processing unit (CPU).

Additionally or alternatively, the processing unit may be or may comprise a microprocessor, thus specifically the processor's elements may be contained in one single integrated circuitry (IC) chip. Additionally or alternatively, the processing unit may be or may comprise one or more application specific integrated circuits (ASICs) and/or one or more field-programmable gate arrays (FPGAs) or the like. The processing unit may be a processing unit of the transport interface.

The method, in particular step i), may comprise a preprocessing step comprising one or more of: scaling the image; shaping the image; background subtraction; at least one smoothing step comprising applying at least one filter such as a Gaussian filter, a Savitzky-Golay smoothing, median filter and/or bilateral filtering. The preprocessing may be performed by the processing unit. For example, the method may comprise determining a region of interest of the captured image by using the processing unit. The process of determining a region of interest may be implemented by using at least one computer vision process. Such techniques are generally known to the skilled person. Since the cavities with or without holder and tube are more or less circular in shape, basic computer vision method e.g. Hough Circle Transform can be used to find the cavities location to determine the entire region of interest. Other preprocessing steps or processes may be used in addition or alternatively

The term "trained model" as used herein is a broad term and is to be given its ordinary and customary meaning to a person of ordinary skill in the art and is not to be limited to a special or customized meaning. The term specifically may refer, without limitation, to a mathematical model which was trained on at least one training data set using one or more of machine learning, deep learning, neural networks, or other form of artificial intelligence. The term "training" as used herein is a broad term and is to be given its ordinary and customary meaning to a person of ordinary skill in the art and is not to be limited to a special or customized meaning. The term specifically may refer, without limitation, to a process of building the trained model, in particular determining parameters, in particular weights, of the model.

The trained model is a convolutional neural network (CNN) model. The CNN model may be based on a CNN architecture configured for object classification, detection and localization. The state-of-the art CNN architectures act like building block that could be reused and trained on custom data, in this case, transport interface cavity images with different states so that the CNN based model can get custom weights based on the given input image. Specifically, the convolutional neural network model is based on a YOLOV3-tiny deep learning architecture. With respect to YOLOV3-tiny deep learning architecture reference is made to Joseph Redmon and Ali Farhadi, "YOLOv3: An Incremental Improvement" 2018 arXiv:1804.02767. The YOLOV3-tiny deep learning architecture can be 1000x faster than Region-based Convolutional Neural networks (R-CNN) and 100x faster than Fast R-CNN with similar or better prediction accuracy. A quick inference time for classification may be an important consideration for choosing the CNN architecture.

The method may comprise pre-training the model and re-training the model. The pre-trained model may be trained on image data of the transport interface using transfer learning techniques. The image data comprises a plurality of images of the transport interface with cavities in different states. The plurality of images may comprise images of the transport interface with cavities in different states having varying lighting conditions and/or distance between viewpoint and the cavity. Specifically, the method may comprise at least one training step, in particular before step i). The training step may comprise generating the at least one training data set. The training data set may be a set of labelled sample data. The training data set may be generated by capturing a set of multiple images of at least a part of the transport interface, wherein for the multiple images the cavities are in different states, e.g. with empty cavity, with presence or absence of the holder in the cavity, with closed sample tube in the cavity or with open sample tube in the cavity and the like. In addition, illumination and lighting conditions may be varied for the set of multiple images. In addition, a distance between camera and cavity may be varied for the set of multiple images. The captured set of multiple images may be annotated manually and the region of interest, such as bounding boxes, may be labelled with one of the categories.

The training of the model may comprise using transfer learning techniques. Specifically, the model, in particular the YOLOv3-tiny model, may use convolutional weights that are pre-trained on image data such as on the Imagenet dataset as described e.g. in J. Deng, W. Dong, R. Socher, L. Li, Kai Li and Li Fei-Fei, "ImageNet: A large-scale hierarchical image database," 2009 IEEE Conference on Computer Vision and Pattern Recognition, Miami, FL, 2009, pp. 248-255, doi: 10.1109/CVPR.2009.5206848. The benefit behind using transfer learning techniques may be explained as follows: A human who knows how to drive a car, can learn quickly and efficiently how to drive a truck. Similarly, a model which is already trained to detect generic objects such as a human, car, bike and the like can learn quickly how to determine the status of the cavity as a lower convolution layer in the CNN model already knows how to identify tiny features like lines, edges, dots etc.

For training the model to be able to determine the status of the cavity, the training data set may be split into training set and test set, for example, into 4::1 proportion. Settings of the standard YOLOV3-tiny model may be further adjusted and hyper parameters may be tuned to be able to classify the cavity state and to allow additional training, in particular retraining, of the trained model. The parameters of the model, in particular convolutional weights of the YOLOV3-tiny model, may be trained on the training set and tested by the test set. The model trained on the training set and tested by the test set may be denoted as candidate model herein.

The method may further comprise generating a final trained model. Specifically, the method may comprise retraining the candidate model based on unseen input data, such as on at least one, e.g. historic, custom prepared dataset. This may allow even further adjusting parameters, in particular weights, for the trained model and/or considering custom conditions. The final trained model with adjusted weight may generated by training until the average loss function values of CNN model, specifically YOLOV3-tiny model gets much lesser than one.

The trained model is configured for categorizing the state of the cavity into at least one category. The categorizing in step ii) may comprise determining a category of the state of the cavity. The determining of the category may be denoted as predicting the category. The category may be selected from the group consisting of: empty cavity; presence of a holder in the cavity; closed sample tube in the cavity; open sample tube in the cavity. The trained model may be configured for locating sample tubes and/or holders and/or for identifying sample tubes in the carousel. Thus, the trained model may be configured for characterizing the transport interface itself, in particular all the cavities of the carousel.

The trained model may be configured for classifying different image regions into different categories. For example, in case the image comprises more than one cavity, the trained model is configured for determining the status of each of the cavities of the image. Thus, the trained model may be configured for characterizing multiple carriers at a time.

The method may comprise re-training the earlier trained model in case of a new type of sample tube is used at the interface and the cavity status has to be determined. Only one-time re-training with new sample tube images may be required.

The term "communication interface" as used herein is a broad term and is to be given its ordinary and customary meaning to a person of ordinary skill in the art and is not to be limited to a special or customized meaning. The term specifically may refer, without limitation, to an item or element forming a boundary configured for transferring information. In particular, the communication interface may be configured for transferring information from a computational device, e.g. a computer, such as to send or output information, e.g. onto another device. Additionally or alternatively, the communication interface may be configured for transferring information onto a computational device, e.g. onto a computer, such as to receive information. The communication interface may specifically provide means for transferring or exchanging information. In particular, the communication interface may provide a data transfer connection, e.g. Bluetooth, NFC, inductive coupling or the like. As an example, the communication interface may be or may comprise at least one port comprising one or more of a network or internet port, a USB-port and a disk drive. The communication interface may further comprise at least one display device.

The method comprises determining how many times the transport interface has to rotate for clearance and/or if it is possible to start operation with the connected device, in particular immediately, based on the determined and/or provided category, in particular by using the processing unit. The method may comprise capturing at least one image of the carousel. In step ii), the status of each of the cavities may be categorized. In step iii) the status of at least one cavity is provided. For example, the carousel may comprise five cavities. The method may return that two of the cavities comprise sample tubes and the other three are empty. In addition, an information about positions or relative locations of the respective cavities in the carousel may be provided by the trained model. Thus, it is possible to determine from the status of the cavities and their location that how many times the transport interface may need to rotate for clearance and/or if it is possible to start the transfer of tube to and from the connected device immediately without the need of any clearance.

Further proposed is a computer program for determining at least one state of at least one cavity of a transport interface configured for transporting sample tubes is disclosed, configured for causing a computer or a computer network to fully or partially perform the method according to the present invention, when executed on the computer or the computer network. The computer program may be configured to perform at least one of steps ii) to iii) of the method for determining at least one state of at least one cavity of a transport interface configured for transporting sample tubes. The computer program may further comprise instructions to capture the at least one image, e.g. from the top view, in step i).

Specifically, the computer program may be stored on a computer-readable data carrier and/or on a computer-readable storage medium. As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or computer-readable storage medium.

Further disclosed and proposed herein is a data carrier having a data structure stored thereon, which, after loading into a computer or computer network, such as into a working memory or main memory of the computer or computer network, may execute the method according to the present invention in one or more of the embodiments disclosed herein.

Further disclosed and proposed herein is a computer program product with program code means stored on a machine-readable carrier, in order to perform the method according to the present invention one or more of the embodiments disclosed herein, when the program is executed on a computer or computer network. As used herein, a computer program product refers to the program as a tradable product. The product may generally exist in an arbitrary format, such as in a paper format, or on a computer-readable data carrier. Specifically, the computer program product may be distributed over a data network.

In a further aspect of the present invention, as claimed in claim 10, an inspection device for determining at least one state of at least one cavity of a transport interface configured for transporting sample tubes is disclosed. The inspection device comprises
- at least one camera configured for capturing at least one image of at least a part of the transport interface;
- at least one processing unit configured for categorizing the state of the cavity into at least one category by applying at least one trained model on the image, wherein the trained model is being trained on image data of the transport interface, wherein the image data comprises a plurality of images of the transport interface with cavities in different states;
- at least one communication interface configured for providing the determined category of at least one cavity.

The inspection device is configured for performing the method according to the present invention, such as according to any one of the embodiments disclosed above and/or according to any one of the embodiments disclosed in further detail below.

The methods and devices according to the present invention may provide a large number of advantages over similar methods and devices known in the art. In particular, when the transport interface boots, it can take an image, such as a snapshot using its camera unit, and determine the cavities status. Then it can take the decision as to how many times it needs to rotate for clearance or if it is possible to start operation with connected device immediately. Further, the solution according to the present invention uses state-of-the-art CNN architecture of object classification, detection and localization. The CNN architecture may be updated and/or replaced with time. The CNN based model can take away the burden for manual geometrical feature extraction for object classification. The solution according to the present invention may use an off-the-shelf camera for image acquisition and it can remove the need to use a special expensive camera, since the image processing can be done at a connected computer having a powerful processing unit instead of in a microcontroller of the special camera. Further, the present invention may allow easily including any new sample tube, since the method only requires a one-time re-training with the new sample images. Further, the same trained model can be used for detection of cavity states in many devices as it is much easier to extend this solution for another category in similar setting.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a detail of a laboratory automation system comprising an inspection device for determining at least one state of at least one cavity of a transport interface configured for transporting sample tubes according to the present invention;
- Figure 2: shows a flowchart of a method according to the present invention;
- Figure 3: shows a training step according to the present invention; and
- Figures 4A to B: show experimental results.

### Detailed description of the embodiments

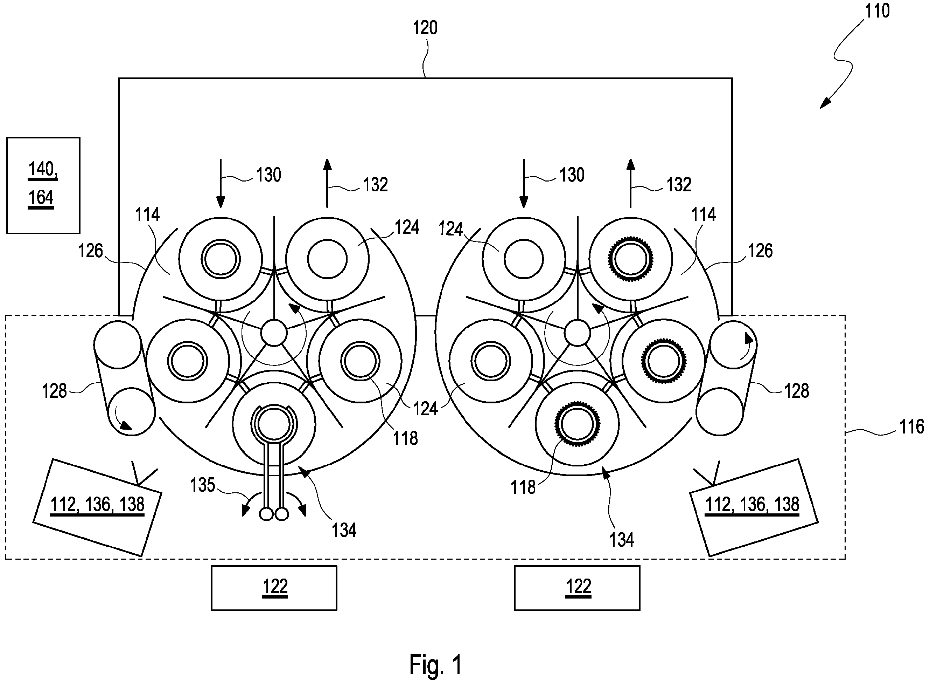

Figure 1 shows, in a highly schematic fashion, a detail of a laboratory automation system (LAS) 110 comprising an inspection device 112 for determining at least one state of at least one cavity 114 of a transport interface 116 configured for transporting sample tubes 118 according to the present invention.

The sample tube 118 may be configured for one or more of containing, storing or transporting the sample. The sample tube 118 may be a glass or transparent plastic tube. The sample tube 118 may be a cylindrical tube, e.g. a cylindrical tube having a circular and/or polygonal cross-section. Other types or forms of sample tubes are also possible. The sample tube 118 may comprise a tube bottom, a tube body and a cap, including a sealing of the cap. The tube bottom may be configured to confine the sample tube 118 at the sample tube's lower end. The tube body may be configured for forming the shape of the sample tube 118. The cap may be configured for reversibly closing up the sample tube at the sample tube's upper end by using a mechanism of a specific sealing type. For example, the sample tube's cap sealing may comprise one or more of a screw type, a rubber type, a hemogard type or a push type.

The upper and lower end of the sample tube 118 may be defined by the way of usage of the sample tube 118.

The sample may be an aliquot of a substance such as a chemical or biological compound.

Specifically, the sample may be or may comprise at least one biological specimen, such as one or more of: blood; blood serum; blood plasma; urine; saliva. Additionally or alternatively, the sample may be or may comprise a chemical substance or compound and/or a reagent.

The laboratory automation system 110 may be a system which is configured for handling sample tubes 118 automatically. Specifically, the LAS 110 may be configured for processing sample tubes 118 and their enclosed samples autonomously and/or fully or partially automatically. A laboratory in which the LAS 110 is used may be for example a clinical laboratory, a forensic laboratory or a blood bank. The LAS 110, as an example, may comprise at least one transport module 120, such as an actuator, configured for handling the at least one sample tube 118, such as configured for handling a plurality of sample tubes 118, e.g. sequentially or in parallel. The transport module 120, as an example, may be configured for automatically moving the at least one sample tube 118, such as through a plurality of handling stations within the system. As an example, the transport module 120 may be or may comprise one or more of a robot arms, a conveying system or a carrousel. Other transport modules 120 are known and may be used. The LAS 110 may further comprise one or more handling stations for handling and/or processing one or more samples contained in the at least one sample tube. As an example, one or more stations for adding components to the sample, one or more stations for heating the sample or one or more stations for sample separation such as by centrifuging may be provided. The LAS 110 may comprise at least one analytical system for sample analysis. The LAS 110 may comprise at least one pre-analytical system, specifically for preparing one or more samples for subsequent sample analysis.

The transport interface 116 is configured for transferring or providing transfer of the at least one sample tube 118 between the transport module 120 and a connected device 122, in particular a handling station.

The transport interface 116 may comprise a plurality of cavities 114 each configured for receiving and/or holding at least one sample tube 118. The cavity 114 may be or may comprise a reception region and/or holding region configured for receiving and/or holding at least one sample tube 118. The cavities 114 may comprise at least one holder 124. For example, the holder 124 may be a single holder configured for receiving and holding exactly one sample tube 118. The holder 124 may be configured for directly contacting with the sample tube 118 for receiving and holding the sample tube 118. For example, the holder 124 may be open at one side, in particular at a top or face side, for enabling insertion of the sample tube 118.

The transport interface 116 may comprise at least one carousel 126, wherein the cavities 114 are distributed, in particular equally distributed over the circumference of the carousel 126. The cavities 114 may be positioned by using a positioning element such as a position star. The carousel 126 may be rotatable, in particular by using at least one rotor 128. The transport interface 116 may face the transport module 120 at at least one input position 130, in particular minimum one input position 130. At the input position 130, the holder 124 and/or the holder 124 and the sample tube 118 can be loaded, in particular automatically, onto the respective cavity 114. The transport interface 116 may face the transport module 120 and/or a further transport module at at least one further position, in particular minimum one further position, denoted output position 132. At the output position 132, the holder 124 and/or the holder 124 and the sample tube 118 can be transferred from the transport interface 116 to the transport module 120 and/or to the further transport module. The transport interface 116 may comprise at least one handover position 134, wherein at the handover position 134 the sample tube 118 can be transferred from the transport interface 116 to the connected device 122 and/or from the connected device 122 to the transport interface 116. At the handover position 134 optionally the sample tube 118 may be centered, denoted by reference number 135.

The status of the at least one cavity 114 may be an arbitrary information characterizing the cavity 114 into categories such as empty cavity, presence of a holder 124 in the cavity 114, closed sample tube 118 in the cavity 114; open holder 124 in the cavity 114. The empty cavity 114 may be a cavity 114 without sample tube 118 and holder 124. The category presence of a holder 124 may be further divided into holder 124 with or without sample tube 118. The category closed sample tube 118 may refer to a situation with a holder 124 and a sample tube 118 in the cavity 114, wherein the sample tube 118 is closed by the sample tube's cap. The category open sample tube 118 may refer to a situation with a holder 124 and a sample tube 118 in the cavity 114, wherein the sample tube 118 is not closed by the sample tube's cap.

The inspection device 112 comprises at least one camera 136 configured for capturing at least one image of at least a part of the transport interface 116. The camera 136 may be a pixelated camera comprising a matrix of pixels. As an example, the camera 136 may comprise at least one camera chip, such as at least one CCD chip and/or at least one CMOS chip configured for recording images. The camera 136 may be an element or unit of the transport interface 116.

The camera 136, besides the at least one camera chip or imaging chip, may comprise further elements, such as one or more optical elements, e.g. one or more lenses. As an example, the camera 136 may comprise one or more variable lenses which may be adjusted, automatically or manually such as at least one vario zoom camera lens. Alternatively, however, the camera 136 may be a fix-focus camera, having at least one lens which is fixedly adjusted with respect to the camera 136.

The camera 136 specifically may be a color camera. Thus, such as for each pixel, color information may be provided or generated, such as color values for three colors. A larger number of color values is also feasible, such as four color values for each pixel. Color cameras are generally known to the skilled person. Thus, as an example, the camera chip may consist of a plurality of three or more different color sensors each, such as color recording pixels like one pixel for red (R), one pixel for green (G) and one pixel for blue (B). For each of the pixels, such as for R, G, B, values may be recorded by the pixels, such as digital values in the range of 0 to 255, depending on the intensity of the respective color. Instead of using color triples such as R, G, B, as an example, quadruples may be used. The color sensitivities of the pixels may be generated by color filters or by appropriate intrinsic sensitivities of the sensor elements used in the camera pixels. These techniques are generally known to the skilled person.

The capturing at least one image may comprise one or more of imaging, image recording, image acquisition, image capturing. The capturing at least one image may comprise capturing a single image and/or a plurality of images such as a sequence of images. The capturing of the image comprises recording continuously a sequence of images such as a video stream or a movie. The image is a frame of at least one video stream captured by using the camera 136.

The camera 136 may be configured for capturing the at least one image comprising a region of interest. Specifically, the capturing of the image may refer to embodiments wherein the at least one image is captured of the whole transport interface 116 and to embodiments wherein the at least one image is captured of the region of interest such as an area or region such as a cavity 114 of the transport interface 116.

The capturing of the image may be synchronized to a movement of transport interface 116. Additionally or alternatively, the capturing of the image may be automatically initiated, e.g. such as imaging in recurrent intervals or once the presence of the at least one object within a field of view and/or within a predetermined sector of the field of view of the camera 136 is automatically detected. The capturing of the images may comprise, as an example, acquiring a stream of images with the camera 136 , wherein one or more of the images, automatically or by user interaction. The capturing of the image may be performed and/or supported by a processor, such as of transport interface 116. The captured image may be stored in at least one data storage device, such as of the transport interface 116.

The camera 136 may be part of an identification unit 138 configured for one or more of identifying the sample tube 118 such as by reading at least one barcode, recognizing presence of the sample tube 118, detecting the cap of the sample, and the like.

The inspection device 112 comprises at least one processing unit 140 configured for categorizing the state of the cavity 114 into at least one category by applying at least one trained model on the image, wherein the trained model is being trained on image data of the transport interface 116, wherein the image data comprises a plurality of images of the transport interface 116 with cavities 114 in different states. The plurality of images may comprise images of the transport interface 116 with cavities 114 in different states having varying lighting conditions and/or distance between viewpoint and the cavity 114. The processing unit 140 may be or may comprise an arbitrary logic circuitry configured for performing basic operations of a computer or system, and/or, generally, to a device which is configured for performing calculations or logic operations. In particular, the processing unit 140 may be configured for processing basic instructions that drive the computer or system. As an example, the processing unit 140 may comprise at least one arithmetic logic unit (ALU), at least one floating-point unit (FPU), such as a math coprocessor or a numeric coprocessor, a plurality of registers, specifically registers configured for supplying operands to the ALU and storing results of operations, and a memory, such as an L1 and L2 cache memory. In particular, the processing unit 140 may be a multicore processor. Specifically, the processing unit 140 may be or may comprise a central processing unit (CPU). Additionally or alternatively, the processing unit 140 may be or may comprise a microprocessor, thus specifically the processor's elements may be contained in one single integrated circuitry (IC) chip. Additionally or alternatively, the processing unit 140 may be or may comprise one or more application specific integrated circuits (ASICs) and/or one or more field-programmable gate arrays (FPGAs) or the like. The processing unit 140 may be a processing unit of the transport interface 116.

The processing unit 140 may be configured for performing at least one preprocessing step comprising one or more of: scaling the image; shaping the image; background subtraction; at least one smoothing step comprising applying at least one filter such as a Gaussian filter, a Savitzky-Golay smoothing, median filter and/or bilateral filtering. For example, the processing unit 140 may be configured for determining a region of interest of the captured image. For example, the image, also denoted input image, may be read by the processing unit 140 and may be reshaped. The input image may then be passed to an image function which performs mean subtraction and scaling. This image function may allow reducing illumination variation in the input images and scaling can be used for normalization. The process of determining a region of interest may be implemented by using at least one computer vision process. Such techniques are generally known to the skilled person. Thus, as an example, pattern recognition techniques may be used for detecting the cavity 114 or the like. Other pre-processing steps or processes may be used in addition or alternatively.

The trained model may be a mathematical model which was trained on at least one training data set using one or more of machine learning, deep learning, neural networks, or other form of artificial intelligence. The trained model may be a convolutional neural network (CNN) model. The CNN model may be based on a CNN architecture configured for object classification, detection and/or localization The state-of-the art CNN architecture are acts like building blocks that could be reused and trained on custom data, in this case, transport interface cavity images with different states so that the CNN based model can get custom weights based on the given input image. Specifically, the convolutional neural network model is based on a YOLOV3-tiny deep learning architecture. With respect to YOLOV3-tiny deep learning architecture reference is made to Joseph Redmon and Ali Farhadi, "YOLOv3: An Incremental Improvement" 2018 arXiv:1804.02767.

The YOLOV3-tiny deep learning architecture can be 1000x faster than Region-based Convolutional Neural networks (R-CNN) and 100x faster than Fast R-CNN with similar or better prediction accuracy. A quick inference time for classification may be an important consideration for choosing the CNN architecture.

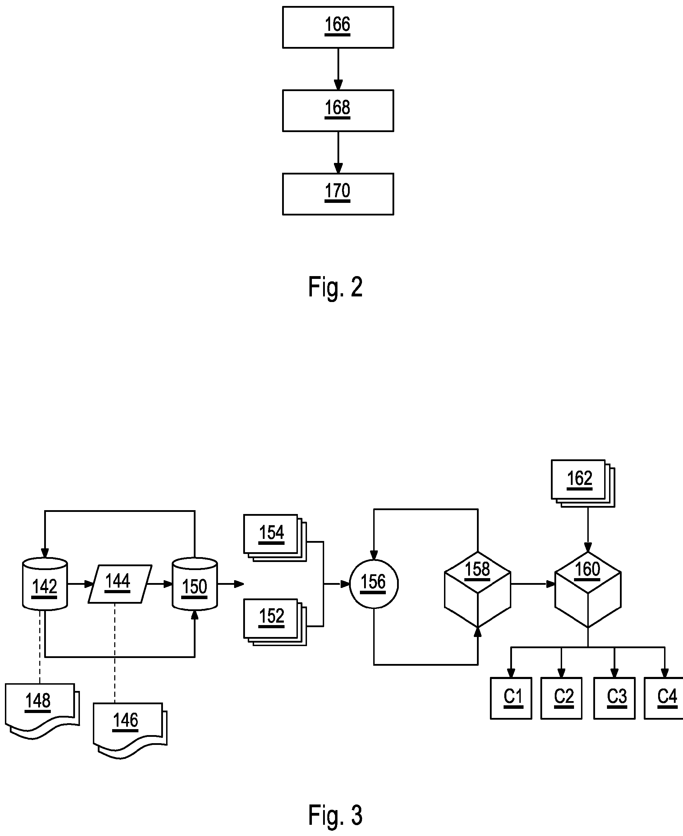

The trained model is being trained on image data of the transport interface 116 using transfer learning techniques. The image data comprises a plurality of images of the transport interface 116 with cavities 114 in different states. The plurality of images may comprise images of the transport interface 116 with cavities 114 in different states having varying lighting conditions and/or distance between viewpoint and the cavity 114. An embodiment of training the model is shown in Figure 3. The training may comprise generating the at least one training data set, denoted with reference number 142. The training data set may be a set of labelled sample data. The training data set may be generated by capturing a set of multiple images of at least a part of the transport interface 116, wherein for the multiple images the cavities 114 are in different states, e.g. with empty cavity 114, with presence or absence of the holder 124 in the cavity 114, with closed sample tube 118 in the cavity 114 or with open sample tube 118 in the cavity 114 and the like. In addition, illumination and lighting conditions may be varied for the set of multiple images. In addition, a distance between camera 136 and cavity 114 may be varied for the set of multiple images. The captured set of multiple images may be preprocessed, denoted with reference number 144. As outlined above, the preprocessing may be performed by the processing unit 140, in particular at least one data preprocessing module 146. The captured images may be visualized, e.g. by using at least one display device 148. The captured set of multiple images may be annotated manually and the region of interest, such as bounding boxes, may be labelled with one of the categories, denoted with reference number 150. This process may be iterated until all the image data is processed.

For training the model to be able to determine the status of the cavity 114, the training data set may be split into training set 152 and test set 154, for example, into 4::1 proportion.

The training of the model may comprise using transfer learning techniques. Specifically, the model, in particular the YOLOv3-tiny model, denoted with reference number 156 in Figure 3, may use convolutional weights that are pre-trained on image data such as images of the ImageNet dataset as described e.g. in J. Deng, W. Dong, R. Socher, L. Li, Kai Li and Li Fei-Fei, "ImageNet: A large-scale hierarchical image database," 2009 IEEE Conference on Computer Vision and Pattern Recognition, Miami, FL, 2009, pp. 248-255, doi: 10.1109/CVPR.2009.5206848. The benefit behind using transfer learning techniques may be explained as follows: A human who knows how to drive a car, can learn quickly and efficiently how to drive a truck. Similarly, a model which is already trained to detect generic objects such as a human, car, bike and the like can learn quickly how to determine the status of the cavity as a lower convolution layer in the CNN model already knows how to identify tiny features like lines, edges, dots etc.

Settings of the standard YOLOV3-tiny model 156 may be further adjusted and hyper parameters may be tuned to be able to classify the cavity state 114 and to allow additional training, in particular retraining, of the trained model. The parameters of the model, in particular convolutional weights of the YOLOV3-tiny model 156, may be trained on the training set 152 and tested by the test set 154. The model trained on the training set 152 and tested by the test set 154 may be denoted as candidate model 158 herein. The candidate model 158 may generated by training until the average loss gets lesser than 1.

As shown in Figure 3, the training may further comprise generating a final trained model 160. Specifically, the method may comprise retraining the candidate model 158 based on unseen input data 162, such as on at least one, e.g. historic, custom prepared dataset. This may allow even further adjusting parameters, in particular weights, for the trained model and/or considering custom conditions. The final trained model 160 with updated weight may generated by training until the average loss function values of CNN model, specificially YOLOV3-tiny model gets much lesser than one.

As further visualized in Figure 3, the trained model is configured for categorizing the state of the cavity 114 into at least one category. The category may be selected from the group consisting of: empty cavity; presence of a holder in the cavity; closed sample tube in the cavity; open sample tube in the cavity. Exemplarily four categories C1 to C4 are shown in Figure 3. The trained model may be configured for locating sample tubes 118 and/or holders 124 and/or for identifying sample tubes 118 in the carousel 126. Thus, the trained model may be configured for characterizing the transport interface 116 itself, in particular all the cavities 114 of the carousel 126.

The trained model may be configured for classifying different image regions into different categories. For example, in case the image comprises more than one cavity 114, the trained model is configured for determining the status of each of the cavities 114 of the image. Thus, the trained model may be configured for characterizing multiple cavities 114 at a time.

The trained model may be re-trained in case of a new type of sample tube 118 is used at the transport interface 116 and the cavity status has to be determined. Only one-time re-training with new sample tube images may be required.

The inspection device further comprises at least one communication interface 164 configured for providing the determined category of at least one cavity 114. In the embodiment of Figure 1, the communication interface 164 is part of the processing unit 140. The communication interface 164 may be configured for transferring information from a computational device, e.g. a computer, such as to send or output information, e.g. onto another device.

Additionally or alternatively, the communication interface 164 may be configured for transferring information onto a computational device, e.g. onto a computer, such as to receive information. The communication interface 164 may specifically provide means for transferring or exchanging information. In particular, the communication interface 164 may provide a data transfer connection, e.g. Bluetooth, NFC, inductive coupling or the like. As an example, the communication interface 164 may be or may comprise at least one port comprising one or more of a network or internet port, a USB-port and a disk drive. The communication interface 164 may further comprise at least one display device.

The processing unit 140 is configured for determining how many times the transport interface 116 has to rotate for clearance and/or if it is possible to start operation with the connected device, in particular immediately, based on the determined and/or provided category. The camera 136 may capture at least one image of the carousel 126. The processing unit 140 may categorize the status of each of the cavities 114. For example, the carousel 126 may comprise five cavities. The processing unit 140 may determine that two of the cavities comprise sample tubes and the other three are empty. In addition, an information about positions or relative locations of the respective cavities 114 in the carousel 126 may be provided by the trained model. Thus, it is possible to determine from the status of the cavities 114 and their location that how many times the transport interface 116 may need to rotate for clearance and/or if it is possible to start the transfer from the tube to and from the connected device 122 immediately without the need of any clearance.

Figure 2 shows a flowchart of a method according to the present invention and as claimed in claim 1. The method comprises the following steps which specifically may be performed in the given order. It shall be noted, however, that a different order is also possible. Further, it is also possible to perform one or more of the method steps once or repeatedly. Further, it is possible to perform two or more of the method steps simultaneously or in a timely overlapping fashion. The method may comprise further method steps which are not listed. The method comprising:
i) (denoted with reference number 166) capturing the at least one image of at least a part of the transport interface 116 by using the camera 136;
ii) (denoted with reference number 168) categorizing the state of the cavity 114 into at least one category by applying the trained model on the image by using the processing unit 140, wherein the trained model is being trained on image data of the transport interface 116, wherein the image data comprises a plurality of images of the transport interface 116 with cavities in different states;

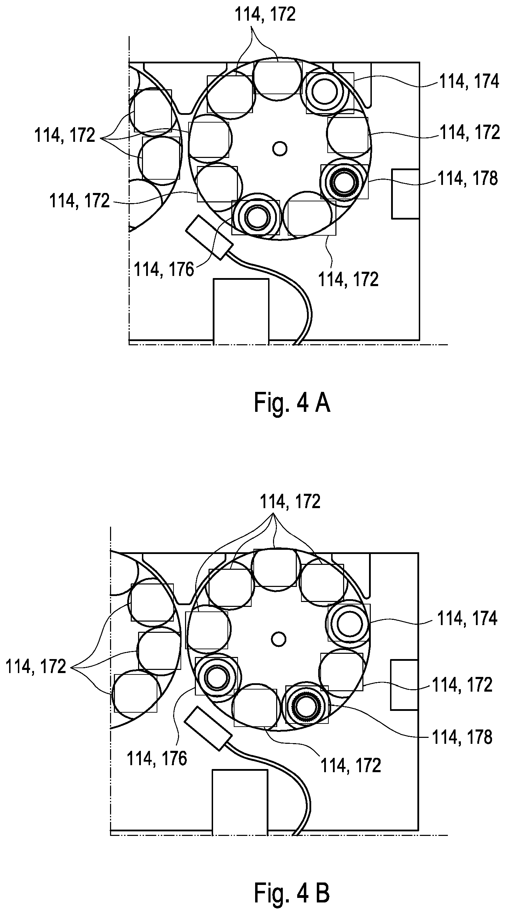

Figures 4A to B show experimental results using the method according to the present invention. In Figures 4A to 4B images are shown with identified and categorized cavities 114. It is important to note that the categorizing of the cavities is reliable even when the view angle from the camera has been changed with a small amount. For Figures 4A to 4B, a prediction confidence threshold was set to 0.5 with a Non-Max Suppression threshold of 0.4 to get the correct bounding box with a classification only if the confidence level is more than 50 percentage. These values are configurable and may be updated if required.

Specifically, in Figure 4A eleven cavities 114 were identified. Eight cavities 114 were categorized as empty cavities, denoted with reference number 172. One cavity 114 was categorized as holder 124 in the cavity 114, denoted with reference number 174. One cavity 114 was categorized as open sample tube 118 in the cavity 114, denoted with reference number 176. One cavity 114 was categorized as closed sample tube 118 in the cavity 114, denoted with reference number 178.

In Figure 4B twelve cavities 114 were identified. Nine cavities 114 were categorized as empty cavities, denoted with reference number 172. One cavity 114 was categorized as holder 124 in the cavity 114, denoted with reference number 174. One cavity 114 was categorized as open sample tube 118 in the cavity 114, denoted with reference number 176. One cavity 114 was categorized as closed sample tube 118 in the cavity 114, denoted with reference number 178.

### List of reference numbers

- 110: laboratory automation system
- 112: inspection device
- 114: cavity
- 116: transport interface
- 118: sample tube
- 120: transport module
- 122: connected device
- 124: holder
- 126: carousel
- 128: rotor
- 130: input position
- 132: output position
- 134: handover position
- 135: centering
- 136: camera
- 138: identification unit
- 140: processing unit
- 142: generating the at least one training data set
- 144: preprocessing
- 146: data preprocessing module
- 148: display device
- 150: manually annotating
- 152: training set
- 154: test set
- 156: YOLOv3-tiny model
- 158: candidate model
- 160: final trained model
- 162: unseen input data
- 164: communication interface
- 166: capturing
- 168: categorizing
- 170: providing
- 172: empty cavity
- 174: holder in the cavity
- 176: open sample tube
- 178: closed sample tube

## Claims

1. A method for determining at least one state of at least one cavity (114) of a transport interface (116) configured for transporting sample tubes (118), comprising:
i) (166) capturing at least one image of at least a part of the transport interface (116) by using at least one camera (136), wherein the image in step i) is a frame of at least one video stream captured by using the camera (136);
ii) (168) categorizing the state of the cavity (114) into at least one category by applying at least one trained model on the image by using at least one processing unit (140), wherein the trained model is being trained on image data of the transport interface (116), wherein the image data comprises a plurality of images of the transport interface (116) with cavities (114) in different states, wherein the trained model is a convolutional neural network model;
iii) (170) providing the determined category of at least one cavity via at least one communication interface (164),
wherein the transport interface (116) is a device forming a physical boundary configured for transferring or providing transfer of the sample tubes (118) between a transport module (120) and a connected device (122), wherein the method comprises determining how many times the transport interface (116) has to rotate for clearance and optionally if it is possible to start operation with the connected device (122) based on the determined and/or provided category.

2. The method according to the preceding claim, wherein the trained model is configured for classifying different image regions into different categories.

3. The method according to any one of the preceding claims, wherein the method comprises a preprocessing step comprising one or more of: scaling the image; shaping the image; background subtraction; at least one smoothing step comprising applying at least one filter such as a Gaussian filter, a Savitzky-Golay smoothing, median filter and/or bilateral filtering.

4. The method according to any one of the preceding claims, wherein the category is selected from the group consisting of: empty cavity (114); presence of a holder (124) in the cavity (114); closed sample tube (118) in the cavity (114); open sample tube (118) in the cavity (114).

5. The method according to any one of the preceding claims, wherein the method comprises at least one training step, wherein the training step comprises generating the at least one training data set, wherein the training data set is generated by capturing a set of multiple images of at least a part of the transport interface (116), wherein for the multiple images the cavities (114) are in different states.

6. The method according to the preceding claim, wherein the training step comprises using transfer learning techniques.

7. The method according to any one of the two preceding claims, wherein the training step comprises retraining the trained model based on at least one custom prepared dataset.

8. A computer program for determining at least one state of at least one cavity (114) of a transport interface (116) configured for transporting sample tubes (118), wherein the computer program comprises instructions which, when the program is executed by at least one processor, cause the processor to carry out the method, in particular steps ii) to iii), according to any one of the preceding claims.

9. A computer-readable storage medium comprising instructions which, when executed by at least one processor, cause the processor to carry out the method according to any one of the preceding claims referring to a method.

10. Inspection device (112) for determining at least one state of at least one cavity (114) of a transport interface (116) configured for transporting sample tubes (118), wherein the transport interface (116) is a device forming a physical boundary configured for transferring or providing transfer of the sample tubes (118) between a transport module (120) and a connected device (122), wherein the inspection device (112) comprises
- at least one camera (136) configured for capturing at least one image of at least a part of the transport interface (116), wherein the image is a frame of at least one video stream captured by using the camera (136);
- at least one processing unit (140) configured for categorizing the state of the cavity (114) into at least one category by applying at least one trained model on the image, wherein the trained model is being trained on image data of the transport interface (116), wherein the trained model is a convolutional neural network model, wherein the image data comprises a plurality of images of the transport interface (116) with cavities (114) in different states;
- at least one communication interface (164) configured for providing the determined category of at least one cavity (114),
wherein the inspection device is configured for determining how many times the transport interface (116) has to rotate for clearance and optionally if it is possible to start operation with the connected device (122) based on the determined and/or provided category.

11. The inspection device (112) according to the preceding claim, wherein the inspection device (112) is configured for performing the method according to any one of the preceding claims referring to a method.

## Patentansprüche

1. Verfahren zur Bestimmung mindestens eines Zustandes mindestens eines Hohlraums (114) einer Transportschnittstelle (116) mit Konfiguration zum Transport von Probenröhrchen (118), umfassend:
i) (166) Aufnehmen mindestens eines Bildes mindestens eines Teils der Transportschnittstelle (116) unter Verwendung mindestens einer Kamera (136), wobei das Bild in Schritt i) ein Einzelbild mindestens eines Videostreams ist, der unter Verwendung der Kamera (136) aufgenommen wurde;
ii) (168) Kategorisieren des Zustandes des Hohlraums (114) in mindestens eine Kategorie durch Anwenden mindestens eines trainierten Modells auf das Bild unter Verwendung mindestens einer Verarbeitungseinheit (140), wobei das trainierte Modell mit Bilddaten der Transportschnittstelle (116) trainiert wird, wobei die Bilddaten eine Vielzahl von Bildern der Transportschnittstelle (116) mit Hohlräumen (114) in verschiedenen Zuständen umfassen, wobei das trainierte Modell ein neuronales Faltungsnetzmodell ist;
iii) (170) Bereitstellen der bestimmten Kategorie mindestens eines Hohlraums über mindestens eine Kommunikationsschnittstelle (164),
wobei die Transportschnittstelle (116) eine Vorrichtung ist, die eine physikalische Grenze mit Konfiguration zur Übertragung oder Bereitstellung einer Übertragung der Probenröhrchen (118) zwischen einem Transportmodul (120) und einer verbundenen Vorrichtung (122) bildet, wobei das Verfahren die Bestimmung umfasst, wie oft sich die Transportschnittstelle (116) für die Freimachung drehen muss, und gegebenenfalls, ob es möglich ist, den Betrieb mit der verbundenen Vorrichtung (122) basierend auf der bestimmten und/oder bereitgestellten Kategorie zu starten.

2. Verfahren nach dem vorhergehenden Anspruch, wobei das trainierte Modell zur Klassifizierung verschiedener Bildregionen in verschiedene Kategorien konfiguriert ist.

3. Verfahren nach einem der vorhergehenden Ansprüche, wobei das Verfahren einen Vorverarbeitungsschritt umfasst, der eines oder mehrere der Folgenden umfasst: Skalieren des Bildes; Formen des Bildes; Hintergrundsubtraktion; mindestens einen Glättungsschritt, der das Anwenden mindestens eines Filters wie eines Gaußschen Filters, einer Savitzky-Golay-Glättung, eines Medianfilters und/oder einer bilateralen Filterung umfasst.

4. Verfahren nach einem der vorhergehenden Ansprüche, wobei die Kategorie ausgewählt ist aus der Gruppe, bestehend aus leerem Hohlraum (114); Vorhandensein eines Halters (124) in dem Hohlraum (114); geschlossenem Probenröhrchen (118) in dem Hohlraum (114); offenem Probenröhrchen (118) in dem Hohlraum (114).

5. Verfahren nach einem der vorhergehenden Ansprüche, wobei das Verfahren mindestens einen Trainingsschritt umfasst, wobei der Trainingsschritt das Erzeugen des mindestens einen Trainingsdatensatzes umfasst, wobei der Trainingsdatensatz durch Aufnehmen eines Satzes mehrerer Bilder mindestens eines Teils der Transportschnittstelle (116) erzeugt wird, wobei sich die Hohlräume (114) für die mehreren Bilder in verschiedenen Zuständen befinden.

6. Verfahren nach dem vorhergehenden Anspruch, wobei der Trainingsschritt die Verwendung von Transferlerntechniken umfasst.

7. Verfahren nach einem der beiden vorhergehenden Ansprüche, wobei der Trainingsschritt das Neutrainieren des trainierten Modells basierend auf mindestens einem maßgeschneidert vorbereiteten Datensatz umfasst.

8. Computerprogramm zur Bestimmung mindestens eines Zustandes mindestens eines Hohlraums (114) einer Transportschnittstelle (116) mit Konfiguration zum Transport von Probenröhrchen (118), wobei das Computerprogramm Anweisungen umfasst, die, wenn das Programm von mindestens einem Prozessor ausgeführt wird, den Prozessor veranlassen, das Verfahren, insbesondere die Schritte ii) bis iii), nach einem der vorhergehenden Ansprüche auszuführen.

9. Computerlesbares Speichermedium, umfassend Anweisungen, die, wenn sie von mindestens einem Prozessor ausgeführt werden, den Prozessor veranlassen, das Verfahren nach einem der vorhergehenden, auf ein Verfahren bezogenen Ansprüche auszuführen.

10. Inspektionsvorrichtung (112) zur Bestimmung mindestens eines Zustandes mindestens eines Hohlraums (114) einer Transportschnittstelle (116) mit Konfiguration zum Transport von Probenröhrchen (118), wobei die Transportschnittstelle (116) eine Vorrichtung ist, die eine physikalische Grenze mit Konfiguration zur Übertragung oder Bereitstellung einer Übertragung der Probenröhrchen (118) zwischen einem Transportmodul (120) und einer verbundenen Vorrichtung (122) bildet, wobei die Inspektionsvorrichtung (112) Folgendes umfasst:
- mindestens eine Kamera (136) mit Konfiguration zum Aufnehmen mindestens eines Bildes mindestens eines Teils der Transportschnittstelle (116), wobei das Bild ein Einzelbild mindestens eines Videostreams ist, der unter Verwendung der Kamera (136) aufgenommen wurde;
- mindestens eine Verarbeitungseinheit (140) mit Konfiguration zum Kategorisieren des Zustandes des Hohlraums (114) in mindestens eine Kategorie durch Anwenden mindestens eines trainierten Modells auf das Bild, wobei das trainierte Modell mit Bilddaten der Transportschnittstelle (116) trainiert wird, wobei das trainierte Modell ein neuronales Faltungsnetzmodell ist, wobei die Bilddaten eine Vielzahl von Bildern der Transportschnittstelle (116) mit Hohlräumen (114) in verschiedenen Zuständen umfassen;
- mindestens eine Kommunikationsschnittstelle (164) mit Konfiguration zum Bereitstellen der bestimmten Kategorie mindestens eines Hohlraums (114),
wobei die Inspektionsvorrichtung zur Bestimmung konfiguriert ist, wie oft sich die Transportschnittstelle (116) für die Freimachung drehen muss, und gegebenenfalls, ob es möglich ist, den Betrieb mit der verbundenen Vorrichtung (122) basierend auf der bestimmten und/oder bereitgestellten Kategorie zu starten.

11. Inspektionsvorrichtung (112) nach dem vorhergehenden Anspruch, wobei die Inspektionsvorrichtung (112) zur Durchführung des Verfahrens nach einem der vorhergehenden, auf ein Verfahren bezogenen Ansprüche konfiguriert ist.

## Revendications

1. Procédé permettant de déterminer au moins un état d'au moins une cavité (114) d'une interface de transport (116) conçue pour transporter des tubes d'échantillons (118), comprenant :
i) (166) la capture d'au moins une image d'au moins une partie de l'interface de transport (116) en utilisant au moins une caméra (136), l'image de l'étape i) étant une trame d'au moins un flux vidéo capturé en utilisant la caméra (136) ;
ii) (168) la catégorisation de l'état de la cavité (114) dans au moins une catégorie en appliquant au moins un modèle entraîné sur l'image en utilisant au moins une unité de traitement (140), le modèle entraîné étant entraîné sur des données d'images de l'interface de transport (116), les données d'images comprenant une pluralité d'images de l'interface de transport (116) avec des cavités (114) dans différents états, le modèle entraîné étant un modèle de réseau neuronal convolutif ;
iii) (170) la fourniture de la catégorie déterminée d'au moins une cavité par l'intermédiaire d'au moins une interface de communication (164),
dans lequel l'interface de transport (116) est un dispositif formant une limite physique conçu pour transférer ou fournir un transfert des tubes d'échantillons (118) entre un module de transport (120) et un dispositif connecté (122), dans lequel le procédé comprend la détermination du nombre de rotations à faire par l'interface de transport (116) pour libérer l'espace et éventuellement s'il est possible d'initier une opération avec le dispositif connecté (122) sur la base de la catégorie déterminée et/ou fournie.

2. Procédé selon la revendication précédente, dans lequel le modèle entraîné est conçu pour classer différentes régions d'image dans différentes catégories.

3. Procédé selon l'une quelconque des revendications précédentes, dans lequel le procédé comprend une étape de prétraitement comprenant une ou plusieurs parmi : la mise à l'échelle de l'image ; la mise en forme de l'image ; la soustraction de l'arrière-plan ; au moins une étape de lissage comprenant l'application d'au moins un filtre tel qu'un filtre gaussien, un lissage de Savitzky-Golay, un filtre médian et/ou un filtrage bilatéral.

4. Procédé selon l'une quelconque des revendications précédentes, dans lequel la catégorie est choisie dans le groupe constitué par : une cavité vide (114) ; la présence d'un support (124) dans la cavité (114) ; un tube d'échantillon fermé (118) dans la cavité (114) ; un tube d'échantillon ouvert (118) dans la cavité (114).

5. Procédé selon l'une quelconque des revendications précédentes, dans lequel le procédé comprend au moins une étape d'entraînement, dans lequel l'étape d'entraînement comprend la génération de l'au moins un ensemble de données d'entraînement, dans lequel l'ensemble de données d'entraînement est généré par la capture d'un ensemble de multiples images d'au moins une partie de l'interface de transport (116), dans lequel pour les multiples images les cavités (114) sont dans différents états.

6. Procédé selon la revendication précédente, dans lequel l'étape d'entraînement comprend l'utilisation de techniques d'apprentissage par transfert.

7. Procédé selon l'une quelconque des deux revendications précédentes, dans lequel l'étape d'entraînement comprend le réentraînement du modèle entraîné sur la base d'au moins un ensemble de données préparé personnalisé.

8. Programme informatique permettant de déterminer au moins un état d'au moins une cavité (114) d'une interface de transport (116) conçue pour transporter des tubes d'échantillons (118), dans lequel le programme informatique comprend des instructions qui, lorsque le programme est exécuté par au moins un processeur, amènent le processeur à mettre en œuvre le procédé, en particulier les étapes ii) à iii), selon l'une quelconque des revendications précédentes.

9. Support de stockage lisible par ordinateur comprenant des instructions qui, lorsqu'elles sont exécutées par au moins un processeur, amènent le processeur à mettre en œuvre le procédé selon l'une quelconque des revendications précédentes se référant à un procédé.

10. Dispositif d'inspection (112) permettant de déterminer au moins un état d'au moins une cavité (114) d'une interface de transport (116) conçue pour transporter des tubes d'échantillons (118), dans lequel l'interface de transport (116) est un dispositif formant une limite physique conçu pour transférer ou fournir un transfert des tubes d'échantillons (118) entre un module de transport (120) et un dispositif connecté (122), dans lequel le dispositif d'inspection (112) comprend
- au moins une caméra (136) conçue pour capturer au moins une image d'au moins une partie de l'interface de transport (116), l'image étant une trame d'au moins un flux vidéo capturé en utilisant la caméra (136) ;
- au moins une unité de traitement (140) conçue pour catégoriser l'état de la cavité (114) dans au moins une catégorie en appliquant au moins un modèle entraîné sur l'image, le modèle entraîné étant entraîné sur des données d'images de l'interface de transport (116), le modèle entraîné étant un modèle de réseau neuronal convolutif, les données d'images comprenant une pluralité d'images de l'interface de transport (116) avec des cavités (114) dans différents états ;
- au moins une interface de communication (164) conçue pour fournir la catégorie déterminée d'au moins une cavité (114),
dans lequel le dispositif d'inspection est conçu pour déterminer le nombre de rotations à faire par l'interface de transport (116) pour libérer l'espace et éventuellement s'il est possible d'initier une opération avec le dispositif connecté (122) sur la base de la catégorie déterminée et/ou fournie.

11. Dispositif d'inspection (112) selon la revendication précédente, dans lequel le dispositif d'inspection (112) est conçu pour réaliser le procédé selon l'une quelconque des revendications précédentes se référant à un procédé.
